# EUROPEAN PATENT SPECIFICATION

(11) **EP 4 425 109 B1**
(45) Date of publication and mention of the grant of the patent: **25.03.2026**
(21) Application number: 23159750.1
(22) Date of filing: 02.03.2023
(51) Int. Cl.: G01D 11/24, G01D 11/30

(54) **SENSOR ASSEMBLY FOR A CRANE**
SENSORANORDNUNG FÜR EINEN KRAN
ENSEMBLE CAPTEUR POUR GRUE

(43) Date of publication of application: 04.09.2024
(73) Proprietor: Deere & Company, Moline, IL 61265 (US)
(72) Inventor: JOKINEN, JARKKO, 68163 Mannheim (DE); SUUTARI, MARKO, 68163 Mannheim (DE)
(74) Representative: Reichert, Christian

(56) References cited:
- JP-A- S59 163 518
- US-A1- 2021 302 203
- US-A1- 2022 018 648

## Description

The invention relates to a sensor assembly for a crane in a forest machine on similar. Cranes in forest machines usually comprise a base attached to a chassis part of the vehicle and a first boom, movably attached to the base. The first boom can comprise hydraulic actuators and hydraulic power lines to move said actuator. Also, the boom and the actuators comprise lubricant lines. To access the inside of the first boom or an underside of the base for inspection of the hydraulic and lubrication lines, maintenance work makes it necessary to access a bottom side of the base and the first boom.

In addition, the base may comprise a sensor, enabled to measure rotational angles of the boom in relation to the vehicle chassis.

One example is disclosed in JPS59163518A, where a rotary encoder is closed up tightly to execute a stable operation without being influenced by the external world, wherein a revolving shaft of the rotary encoder rotates by synchronizing with a revolving shaft of a rotating body by magnetic coupling. In particular a ring-like magnet is fixed an end of the revolving shaft, and this magnet is contained and closed up tightly with a cylindrical vessel-shaped cover formed by a non-magnetic material.

US2022/018648A1 shows a further known rotational sensor for detecting a change in position of a heavy machine.

An optimal placement can be directly under the first boom, so that an overlap between the sensor measurement axis and the central turning axis of the first boom is ensured. This leads to further complications during maintenance or any access to the underside and interior of the base, as the placed sensor needs careful removal beforehand and time-consuming recalibration after reattachment after inspection to ensure the correct measurement.

The present invention solves these problems according to the independent claim, further solutions are presented in the dependent claims.

The arrangement allows a removal of the second cap with the attached sensor. The sensor lines are provided with enough length so that the second cap can be removed from the first cap and the sensor is accessible. The sensor is available for access and service maintenance and any additional service work, such as ensuring prevention of lubricant spill from the base. This improves maintenance effort by reducing work time and reduces fatigue of work personal. The storage of the sensor after maintenance is achieved by attaching the second cap to the first cap. This avoids the need for testing for leakages of the lubricant, further reducing workload.

According to the invention, the second cap is removable from the first cap, so that the sensor is accessible without exposing the service opening.

The fist cap is designed to remain on the base, sealing the interior of the base. At the time of removing the second cap, any preparation for possible leakage or even removal of lubricant is omitted, reducing maintenance time and workload.

In another embodiment, the sensor can be attached to the second cap, so that sensor maintenance removal is enabled by removing the second cap.

The sensor is accessible by solely removing the second cap. The access is achieved in a timely manner and allows sensor checking or exchange with a reduced work effort.

According to the invention, the first cap is removable from the service opening with the second cap attached.

The first cap can be removed from the base without removal of the second cap. The setup ensures that the sensor is kept in a protective cavity between the first and second cap. Maintenance work on the interior of the base is ensured while avoiding removal of the sensor and recalibration after maintenance. Access is possible with reduced effort and time

In another embodiment the second cap can comprise openings for electrical lines.

The sensor lines, power and data links, can be guided through the second cap from the base body or from the chassis area. This allows easy removal and attachment of the second cap with the sensor. Further, this enables complete removal of the first cap with the second cap attached, so that the sensor lines are always protected.

The invention is further described in the following drawings, wherein
Fig. 1 shows the sensor assembly in a isometric view with the crane, first boom and the base as it is applied to the chassis of a vehicle;
Fig. 2 depicts a cut view through a central axis of the base and the crane;
Fig. 3 shows an exploded view of the first and second cap and the sensor placement.

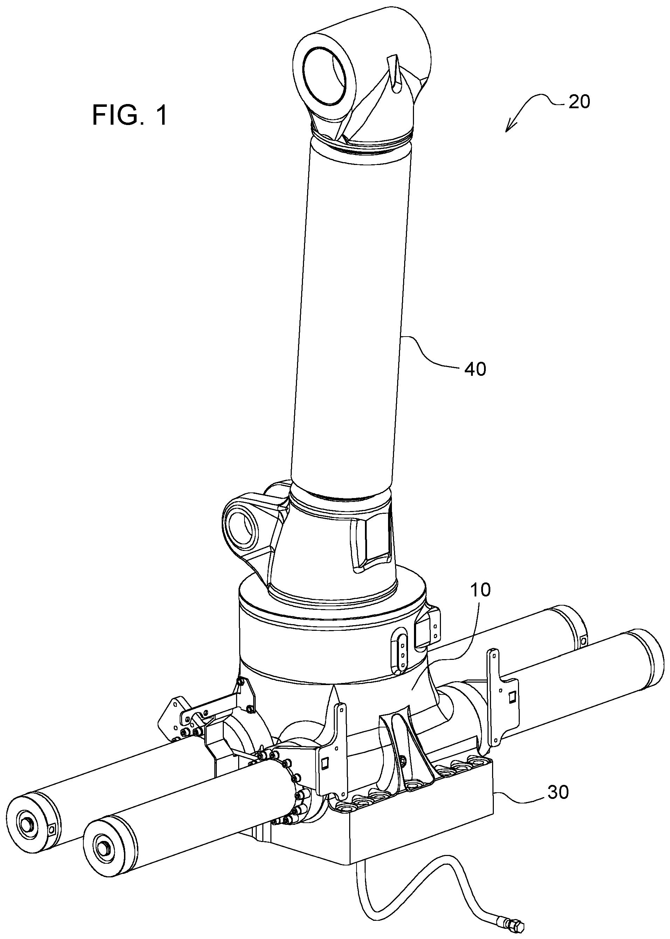

Figure 1 shows an overview for a crane 20. The crane comprises a base 30 to be attached to a vehicle chassis. Atop or to the side of the base 30 are hydraulic cylinders which are used to initiate turning movement of the crane 20 around a vertical axis.

Above the base 30 and the hydraulic cylinders a movable first boom 40 is attached. The hydraulic cylinders turn the boom around a vertical axis. The first boom 40 usually has a second and third boom attached, which are omitted from Fig. 1. The sensor assembly 10 is included in the base 30 so that the sensor is accessible from the bottom of the base 30. The sensor assembly has an opening on the bottom of the base 30 which is accessible from the underside of base 30. The base also comprises openings for hydraulic and power lines, such as to support the sensor.

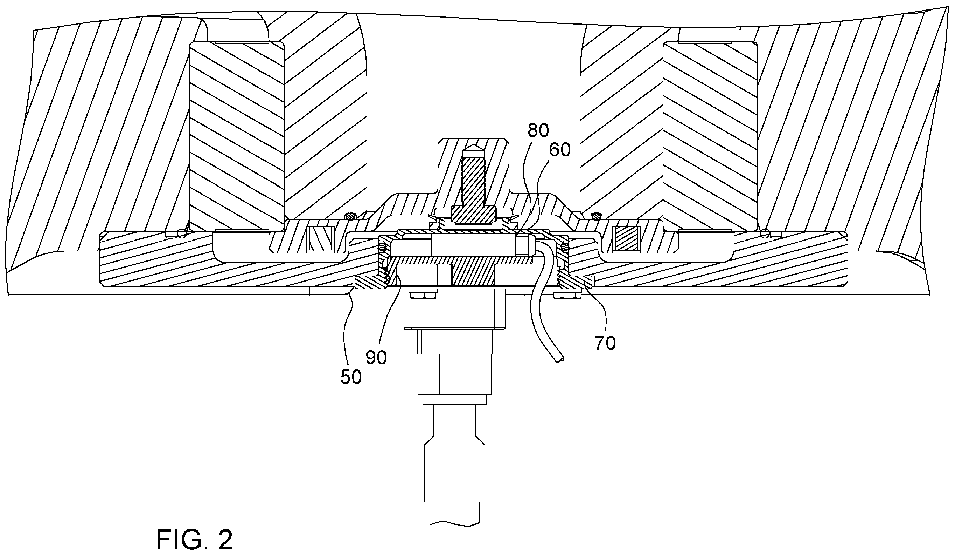

Figure 2 depicts a cut view of the base 30 though the center axis of the crane 20. The service opening 50 is provided in the center area of base 30 and extends from the bottom surface of base 30 towards an inner hollow area of the crane 20. The service opening 50 enables the operator to access the hydraulic control surfaces of the cylinders and to maintain the hydraulic fluids and grease control of the crane 20.

The service opening 50 is closed by a first cap 60 which is removably attached to the base 30 by a screw connection or similar. The sensor 80 is placed inside the cavity of the first cap 60 when the second cap 70 is attached, so that it can overlap with the central axis of rotation from the crane 20. The sensor is provided with electrical and data connections which allow the control and data exchange with a control unit of the crane 20. The second cap 70 is removably attached to an inner surface of the first cap 60 by a threaded connection. The second cap 70 provides an opening for the data and electrical connections of sensor 80. First and second cap 60,70 are in a disc likes shape and thus offer a reduced volume. The space between the first and second cap is dimensioned to just receive the sensor 80 and the cables and connector. The sensor is connected by a screw connection to the second cap 70. This design enables the maintenance on the sensor 80 without opening the service opening 50 and without removing the first cap 60 and enables the hydraulic maintenance without separation of the sensor 80 and the second cap 70 from the first cap 60. This arrangement enables service of the crane 20 with a reduced workload and less work steps.

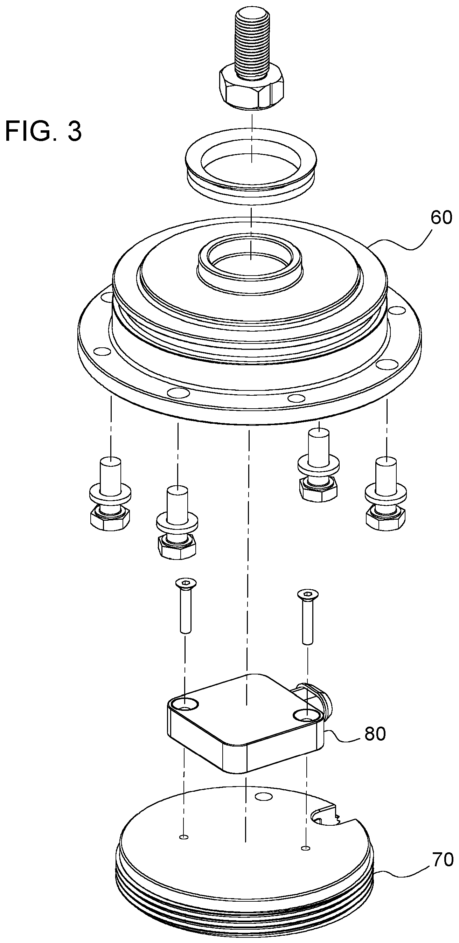

Figure 3 shows an exploded view of the sensor arrangement. The first cap 60 is connected to the base 30 by screw connections around a circumferential surface and/ or a central screw. The connection to the base 30 is sealed so that no fluid or lubricant exits the service opening 50. The sensor 80 is fixed to an inner surface of the second cap 70 by a screw connection. Sensor 80 has a connection port to link the electric and data lines with a connector. The cables are guided through an opening in the second cap surface.

In case of service or functionality check of the sensor 80, the second cap 70 is removed from the first cap 60. As the sensor 80 is attached to the second cap 70 and the cable links allow for a removal without cutting the cable lines, the service effort is reduced as it does not involve a complete removal of all caps and leaves the inner space of the crane 20 intact. The sensor 80 can be unplugged from the connector and be tested on a separate location. After the functionality is complete the process is reversed, and the crane is refitted. This sensor arrangement also avoids and recalibration after reassembly, as the position of the sensor 80 is repeatable after each disassembly.

## Claims

1. System, comprising a base (30), adapted to be attached to a vehicle, and a crane (20), being movably attached to the base (30) by a first boom (40), the system further comprising a sensor assembly (10), adapted for the use in the crane (20), the sensor assembly comprising:
a service opening (50) in the base (30), on an bottom side, opposite of the crane (20),
a first cap (60) attached to the service opening (50),
a second cap (70) attached to the first cap (60), wherein the second cap (70) is removable from the first cap (60), so that the sensor (80) is accessible without exposing the service opening (50),
wherein a rotation sensor (80) is attached to the second cap (70) and the second cap (70) closes a cavity (90) within the first cap (60), so that the sensor (80) is enclosed in the cavity (90) between the first and the second cap (60, 70),
**characterized in that**
the first cap (60) is removable from the service opening (50) with the second cap (70) attached.

2. System according to claim 1, wherein the sensor (80) is attached to the second cap (70), so that sensor maintenance removal is enabled by removing the second cap (70).

3. System according to any of the previous claims, wherein the second cap (70) comprises openings for electrical lines.

## Patentansprüche

1. System, das eine Basis (30), die zur Anbringung an einem Fahrzeug ausgeführt ist, und einen Kran (20), der durch einen ersten Ausleger (40) beweglich an der Basis (30) angebracht ist, umfasst, wobei das System ferner eine Sensoranordnung (10) umfasst, die für die Verwendung in dem Kran (20) ausgeführt ist, wobei die Sensoranordnung Folgendes umfasst:
eine Wartungsöffnung (50) in der Basis (30), auf einer Unterseite, gegenüber dem Kran (20), eine erste Kappe (60), die an der Wartungsöffnung (50) angebracht ist,
eine zweite Kappe (70), die an der ersten Kappe (60) angebracht ist, wobei die zweite Kappe (70) von der ersten Kappe (60) entfernbar ist, so dass der Sensor (80) zugänglich ist, ohne die Wartungsöffnung (50) freizulegen,
wobei ein Drehsensor (80) an der zweiten Kappe (70) angebracht ist und die zweite Kappe (70) einen Hohlraum (90) in der ersten Kappe (60) verschließt, so dass der Sensor (80) in dem Hohlraum (90) zwischen der ersten und der zweiten Kappe (60, 70) eingeschlossen ist,
**dadurch gekennzeichnet, dass**
die erste Kappe (60) mit angebrachter zweiter Kappe (70) aus der Wartungsöffnung (50) herausnehmbar ist.

2. System nach Anspruch 1, wobei der Sensor (80) an der zweiten Kappe (70) angebracht ist, so dass eine Sensorwartungsentfernung durch Entfernen der zweiten Kappe (70) ermöglicht wird.

3. System nach einem der vorhergehenden Ansprüche, wobei die zweite Kappe (70) Öffnungen für elektrische Leitungen umfasst.

## Revendications

1. Système, comprenant une base (30), conçue pour être fixée à un véhicule, et une grue (20), fixée de manière mobile à la base (30) par une première flèche (40), le système comprenant en outre un ensemble capteur (10), conçu pour être utilisé dans la grue (20), l'ensemble capteur comprenant :
une ouverture de service (50) dans la base (30), sur un côté inférieur, opposé à la grue (20), un premier capuchon (60) fixé à l'ouverture de service (50),
un second capuchon (70) fixé au premier capuchon (60),
le second capuchon (70) pouvant être retiré du premier capuchon (60), de sorte que le capteur (80) soit accessible sans exposer l'ouverture de service (50),
un capteur de rotation (80) étant fixé au second capuchon (70) et le second capuchon (70) fermant une cavité (90) à l'intérieur du premier capuchon (60), de sorte que le capteur (80) soit enfermé dans la cavité (90) entre le premier et le second capuchon (60, 70),
**caractérisé en ce que**
le premier capuchon (60) peut être retiré de l'ouverture de service (50) avec le second capuchon (70) fixé.

2. Système selon la revendication 1, le capteur (80) étant fixé au second capuchon (70), de sorte que le retrait de maintenance de capteur soit permis en retirant le second capuchon (70).

3. Système selon l'une quelconque des revendications précédentes, le second capuchon (70) comprenant des ouvertures pour des lignes électriques.
